# FASCICULE DE BREVET EUROPEEN

(11) **EP 1 414 244 B1**
(45) Date de publication et mention de la délivrance du brevet: **17.10.2007**
(21) Numéro de dépôt: 03103882.1
(22) Date de dépôt: 21.10.2003
(51) Int. Cl.: H04N 7/18, H04Q 7/32, H04L 29/06

(54) **Système de visualisation d'images provenant d'au moins une caméra vidéo sur un téléphone cellulaire**
Verfahren zum Zeigen von Bildern von wenigstens einer Videokamera auf einem Funkgerät
System for viewing images from at least one videocamera in a cellular phone

(30) Priorité: 23.10.2002 FR 0213223
(43) Date de publication de la demande: 28.04.2004
(73) Titulaire: FRANCE TELECOM, 75015 Paris (FR)
(72) Inventeur: Danet, Pierre-Yves, 22700 Louannec (FR); Bernard, Delphine, 22300 Lannion (FR); Boullier, Laurent, 22303 Lannion (FR)

(56) Documents cités:
- EP-A- 1 161 105
- WO-A-01/26280
- KOIVISTO A ET AL: "Live multimedia adaptation through wireless hybrid networks" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 juillet 2000 (2000-07-30), pages 1697-1700, XP010512836 ISBN: 0-7803-6536-4

## Description

### Domaine de l'invention

La présente invention concerne un système de visualisation d'images fixes ou animées provenant d'au moins une caméra vidéo sur au moins un téléphone cellulaire.

La présente invention concerne également un dispositif de mise en relation d'au moins un téléphone cellulaire, ou mobile, avec au moins une caméra vidéo connectée à un réseau d'accès via un serveur local, ainsi qu'un procédé de mise en relation d'au moins un téléphone cellulaire avec au moins une caméra vidéo connectée à un réseau d'accès via un serveur local.

Le réseau d'accès est préférentiellement le réseau Internet.

### Etat de la technique antérieure

Les points d'accès des fournisseurs de service sur le réseau Internet (FAI) offrent une fonction de réception d'appel pour permettre à un client de se raccorder puis de naviguer sur le réseau Internet.

Pour ce faire, un serveur muni d'un ensemble de modems attend les demandes des clients et répond aux appels pour ensuite établir une liaison selon le protocole Internet.

Dans le cadre de l'évolution des télécommunications et de la démocratisation des technologies Internet embarquées, la multiplication des équipements Internet ("Internet appliances") nécessite une gestion bidirectionnelle des communications de façon que les clients puissent contrôler celles-ci à distance.

L'invention se situe dans le cadre d'une telle évolution. L'équipement Internet concerné par l'invention comprend une ou plusieurs caméras vidéo (plus communément appelées webcams) connectées à Internet via un serveur local. En l'état actuel de la technique, il n'est pas connu de système pour transmettre les images provenant de webcams, par exemple les webcams d'un réseau domestique, vers le téléphone mobile d'un particulier. L'invention répond à ce besoin.

La demande de brevet EP 1 161 105-A1 divulgue un système et un procédé de diffusion de séquences vidéo sur des terminaux mobiles. Le document intitulé "Live Multimedia Adaptation Through Wireless Hybrid Networks" (MULTIMEDIA AND EXPO, 2000. ICME 2000. 2000 IEEE INTERNATIONAL CONFERENCE ON NEW YORK, NY, USA, 30 Juillet- 2 août 2000, PISCATAWAY, NJ, USA, IEEE, US, 30 juillet 2000, pages 1697-1700) divulgue un réseau multimédia permettant d'ajouter des informations sonores ou de texte à une image.

Dans la suite de la description, de nombreux acronymes de langue française ou anglaise sont utilisés. Leur signification ne sera pas donnée au fur et à mesure de leur apparition dans le corps du texte de la présente description mais dans un glossaire situé en dernière page de ladite description.

### Exposé de l'invention

L'invention concerne un dispositif de mise en relation d'au moins un téléphone cellulaire avec au moins une caméra vidéo connectée à un réseau d'accès via un serveur local. Le dispositif comprend les modules logiciels suivants :
- une interface comportant au moins un module de gestion des appels d'au moins un utilisateur distant provenant d'un téléphone cellulaire,
- un module de gestion de communications assurant l'authentification et la sécurisation de l'accès ainsi que l'aboutement d'une communication entre le téléphone cellulaire et le serveur local,
- un module frontal de communication qui opère la gestion des communications avec le serveur local relié à la caméra vidéo, lesdites communications étant établies via le réseau d'accès,
- un module de gestion et de résolution de stratégie de diffusion d'images provenant de la caméra vidéo vers le téléphone cellulaire permettant de transformer les images en fonction de capacités du téléphone cellulaire et d'un mode de transmission choisi, et
- un module d'exploitation pour réaliser la gestion et l'administration de paramètres du téléphone cellulaire.

Selon une caractéristique supplémentaire, l'interface comprend un module serveur Internet et/ou un module serveur WAP et/ou un module serveur SMS ou MMS.

Selon encore une caractéristique supplémentaire, l'interface traite les différentes requêtes provenant du téléphone cellulaire pour les présenter dans un protocole compréhensible par le module de gestion des communications.

Selon encore une caractéristique supplémentaire, le module frontal de communication gère l'établissement et la rupture des communications entre ledit dispositif et le serveur local.

Selon encore une caractéristique supplémentaire, le dispositif comprend des moyens logiciels et/ou physiques permettant de gérer des conflits possibles entre des appels entrants et des appels sortants et des moyens permettant d'être configurés et supervisés via une interface homme-machine locale ou déportée.

Selon encore une caractéristique supplémentaire, le dispositif comprend des moyens de réception d'image et des moyens de diffusion et de transformation de ladite image vers plusieurs adresses pré-configurées.

Selon encore une caractéristique supplémentaire, le dispositif comprend des moyens de gestion des appels permettant d'allouer dynamiquement les différents modules serveurs en fonction de leur occupation et, si besoin, de reporter des établissements de liaison non prioritaires lorsque tous les modules serveurs sont utilisés.

Le dispositif de mise en relation de l'invention permet ainsi, à partir d'un certain nombre d'informations telles que, par exemple, le numéro de téléphone d'un réseau local, le type de caméra utilisé, la capacité de traitement du téléphone cellulaire, d'établir, à l'initiative d'un utilisateur, une transmission d'images entre une caméra vidéo et le téléphone cellulaire de l'utilisateur.

L'invention concerne également un système de visualisation d'images fixes ou animées provenant d'au moins une caméra vidéo sur au moins un téléphone cellulaire. Le système de visualisation comprend un dispositif selon l'invention, un réseau radio reliant l'interface dudit dispositif au téléphone cellulaire, et un réseau d'accès reliant le module frontal de communication dudit dispositif à un serveur local relié à la caméra vidéo.

Selon une caractéristique supplémentaire de l'invention, le réseau radio est le réseau GSM, le réseau GPRS, ou le réseau UMTS.

Selon encore une caractéristique supplémentaire de l'invention, le réseau d'accès est le réseau RTC, le réseau GSM, le réseau RNIS, le réseau xDSL, le réseau GPRS, ou le réseau UMTS.

L'invention concerne également un procédé de transmission d'image de caméra vidéo vers un mobile utilisateur via un serveur local, un réseau d'accès et un dispositif de mise en relation. Le procédé comprend les étapes suivantes :
- établissement d'une communication entre un mobile utilisateur et un dispositif de mise en relation selon l'invention,
- à la réception de la communication par le dispositif de mise en relation, demande d'authentification du mobile utilisateur,
- identification des paramètres utilisateur ainsi que du contexte personnel de l'utilisateur,
- établissement de communication avec le serveur local par le dispositif de mise en relation via le réseau d'accès,
- émission d'une commande d'image à partir du mobile utilisateur,
- traduction de la commande d'image en données compréhensibles par la caméra vidéo,
- émission de la commande d'image vers la caméra vidéo,
- réception de la commande d'image par la caméra vidéo,
- transmission de l'image vers le dispositif de mise en relation via le serveur local et le réseau d'accès,
- résolution de la stratégie de diffusion et transformation de l'image dans le dispositif de mise en relation, et
- transmission de l'image vers le mobile utilisateur.

Selon une caractéristique supplémentaire de l'invention, la transmission de l'image vers le mobile utilisateur s'effectue à l'aide d'un message SMS ou MMS.

Selon encore une caractéristique supplémentaire de l'invention, la transmission de l'image vers le mobile utilisateur s'effectue par l'intermédiaire d'un portail WAP/GSM, ou WAP/GPRS, ou WAP/UMTS.

Selon encore une caractéristique supplémentaire de l'invention, la communication entre le dispositif de mise en relation et le serveur local étant établie, l'établissement d'une connexion s'effectue suivant un mode unique quelle que soit l'origine de la communication, le dispositif de mise en relation jouant le rôle de serveur PPP (DHCP) et fournissant une adresse du protocole Internet au serveur local, et dans lequel le dialogue entre le dispositif de mise en relation et le serveur local s'effectue par échange de requêtes HTTP.

Le réseau d'accès entre le serveur local et le dispositif de mise en relation selon l'invention appartient préférentiellement à l'une des deux familles de réseaux suivantes :
- les réseaux d'accès en mode circuit (RTC, GSM, RNIS), ou
- les réseaux d'accès en mode paquet (xDSL, GPRS, UMTS) .

Pour les réseaux d'accès en mode circuit, lorsque l'utilisateur s'est authentifié et a choisi une caméra vidéo, le dispositif de mise en relation dispose du numéro de téléphone du domicile et de l'adresse IP de la caméra dont il souhaite visualiser les images. Le dispositif lance un appel vers le modem du domicile qui décroche après identification de l'appelant. Un routeur, installé derrière le modem, établit une liaison PPP puis TCP avec un module frontal de communication du dispositif de mise en relation. Les couches de protocole IP étant établies, le dispositif de mise en relation envoie une requête HTTP vers l'adresse IP de la caméra demandée. A la réception de cette requête, la caméra retransmet sur les couches du protocole IP établies et selon un protocole dépendant des caractéristiques de la caméra et pouvant être HTTP, FTP ou SMTP, un flux d'images vers le dispositif de liaison avec un débit adapté aux capacités du réseau d'accès et aux capacités d'affichage du mobile distant.

Pour les réseaux d'accès en mode paquet, lorsque l'utilisateur s'est authentifié et a choisi la caméra dont les images sont à visualiser, le dispositif dispose du numéro de téléphone du domicile et de l'adresse IP de la caméra correspondante. Le dispositif interroge un serveur DYNDNS qui lui retransmet l'adresse IP publique du serveur local. Le dispositif lance une requête HTTP vers cette adresse publique sur un numéro de port correspondant à la caméra demandée. A la réception de cette requête, le serveur local identifie l'appelant et route la requête vers l'adresse IP de la caméra en effectuant la translation de port *ad-hoc.* A la réception de cette commande, la caméra retransmet un flux d'images vers le dispositif de liaison avec un débit adapté aux capacités du réseau d'accès et aux capacités d'affichage du mobile distant.

Selon le mode de réalisation préférentiel de l'invention, les caméras vidéo sont des caméras vidéo de réseau domestique et le serveur local auquel elles sont reliées est un serveur domestique. L'invention concerne cependant d'autres applications telles que, par exemple, le cas où les caméras vidéo sont des caméras extérieures de vidéo-surveillance.

### Brève description des figures

D'autres caractéristiques et avantages de l'invention apparaîtront à la lecture d'un mode de réalisation préférentiel fait en référence aux figures jointes parmi lesquelles :

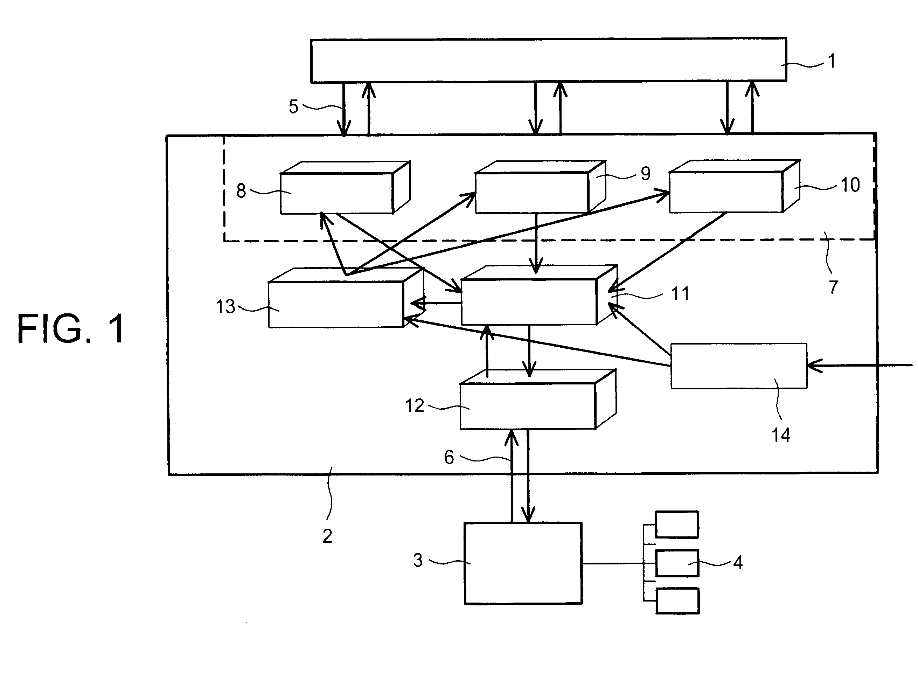

La figure 1 représente un système de visualisation d'images fixes ou animées provenant d'au moins une caméra vidéo connectée à réseau d'accès via un serveur local, sur au moins un téléphone cellulaire, selon l'invention.
La figure 2 représente les différentes étapes d'un procédé de transmission d'images de caméra vidéo vers un téléphone cellulaire, selon l'invention.

Sur toutes les figures les mêmes repères désignent les mêmes éléments.

### Exposé détaillé de modes de réalisation

Le système de visualisation d'images selon l'invention comprend au moins un téléphone cellulaire ou mobile utilisateur 1, un dispositif de mise en relation 2, un serveur local 3 et au moins une caméra vidéo 4 reliée au serveur local 3. Le mobile 1 est relié au dispositif 2 par un réseau radio 5 et le serveur local 3 est relié au dispositif 2 par un réseau d'accès 6, par exemple le réseau Internet.

Le dispositif de mise en relation 2 comprend :
- une interface multimodale 7 comportant au moins un module serveur Internet/HTTP 8, un module serveur WAP 9 et un module serveur SMS/MMS 10 ;
- un module de gestion des communications 11 assurant l'authentification et la sécurisation de l'accès ainsi que l'aboutement de la communication entre le mobile 1 d'un utilisateur distant et le serveur local 3,
- un module frontal de communication 12 qui opère la gestion des appels vers le serveur local 3,
- un module 13 de gestion de stratégie de diffusion d'images en provenance de la caméra vidéo, et
- un module d'exploitation 14 qui est relié aux modules 11 et 12, pour réaliser la gestion et l'administration de paramètres de l'utilisateur et qui offre, par exemple, la possibilité d'ajouter, de consulter, de modifier ou de supprimer des abonnés dans le cas d'une application à un service client.

Le mobile utilisateur 1 peut être de différents types (WAP/GSM, ou WAP/GPRS ou WAP/UMTS capable de gérer les messages SMS et/ou MMS).

Le module 7 de gestion des appels utilisateurs traite les différentes requêtes de l'utilisateur pour les présenter dans un protocole compréhensible par le module de gestion des communications 11.

Le module de gestion des communications 11 assure l'authentification de l'utilisateur éloigné 1 et la sécurité des accès.

Le module frontal de communication 12 gère l'établissement et la rupture des communications entre le dispositif 2 et le serveur local 3. Ce module remplit une fonction de modem.

Le module de gestion de stratégie de diffusion d'images 13 comprend un module de réception des demandes utilisateur, un module de configuration utilisateur et un module de mise en forme et de transmission des images vers le mobile utilisateur 1.

Le serveur local 3 est relié au réseau de caméras.

Le dispositif de mise en relation 2 comprend des moyens de gestion des appels permettant d'allouer dynamiquement les modems 8, 9, 10 en fonction de leur occupation et, si besoin, de reporter des établissements de liaison non prioritaires lorsque tous les modems sont utilisés.

Le dispositif de l'invention comprend également des moyens logiciels et/ou matériels permettant de gérer les conflits possibles entre les appels entrants et les appels sortants et des moyens permettant d'être configurés et supervisés via une interface homme-machine locale ou déportée.

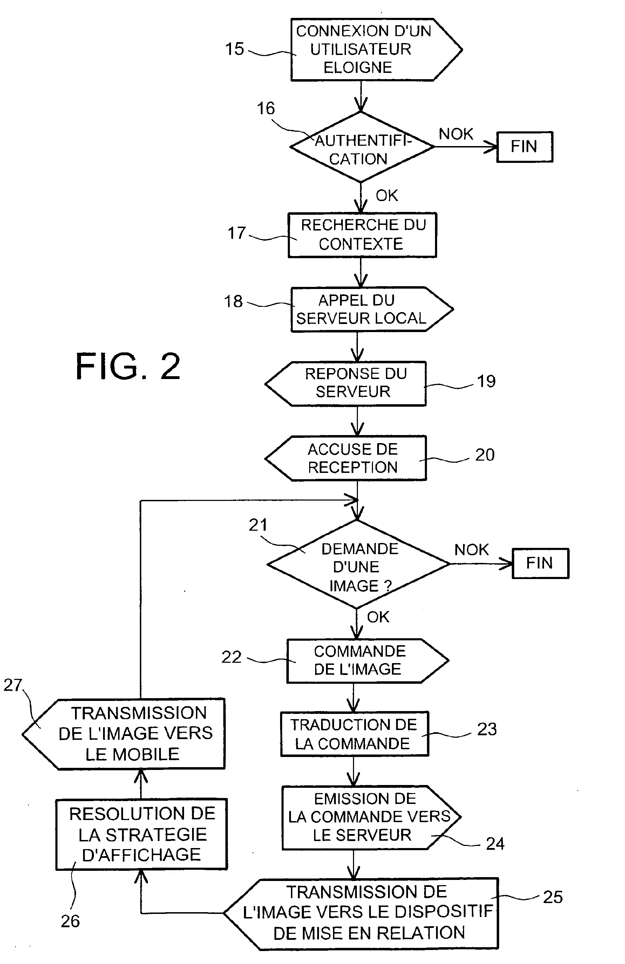

La figure 2 illustre le fonctionnement du système de visualisation selon l'invention.

Lorsqu'un utilisateur distant souhaite recevoir sur son mobile 1 les images provenant d'une caméra vidéo 4, il établit, à l'aide de son mobile 1, une communication avec le dispositif de mise en relation 2 (étape 15, connexion d'un utilisateur éloigné). A la réception de cet appel, le dispositif 2 lui demande de s'authentifier (étape 16, authentification). S'il n'est pas possible d'authentifier l'utilisateur (NOK), il est mis fin à la transmission. Si l'authentification de l'utilisateur se réalise (OK), une recherche du contexte utilisateur est effectuée (étape 17). L'étape de recherche du contexte utilisateur comprend, entre autres, la détermination du numéro de téléphone de l'utilisateur et l'identification du type de la caméra vidéo concernée et des caractéristiques techniques du mobile de l'utilisateur.

Le module frontal de communication 12 engage alors l'établissement d'une communication avec le serveur local 3. L'appel du serveur local (étape 18) est suivie de la réponse du serveur (étape 19), laquelle est suivie d'un accusé de réception (étape 20). Une demande d'image est alors effectuée par l'utilisateur (étape 21). Si la demande d'image n'est pas autorisée (NOK), il est mis fin à la communication. Sinon (OK), il y a commande de l'image (étape 22).

A la réception d'un appel, le serveur local 3 analyse le numéro de l'appelant présenté, par exemple, sous le format V.23 (transmission par modulation à cohérence de phase) et prend la ligne. Lorsque la liaison est établie, le module de gestion des communications 11 effectue un aboutement des liaisons entre le mobile 1 de l'utilisateur et le serveur local 3. Cet aboutement est réalisé au travers d'une fonction d'adaptation qui traduit les requêtes de l'utilisateur en des informations relatives aux images à transmettre qui soient compréhensibles par le serveur local 3 (étape 23). Il y a alors émission de la commande vers le serveur 3 (étape 24) puis transmission de l'image vers le dispositif de mise en relation 2 (étape 25). Le module 13 de gestion et de résolution de stratégie de diffusion transforme alors l'image en fonction, par exemple, des capacités du téléphone cellulaire 1, des préférences de l'utilisateur et du mode de transmission choisi (étape 26). L'image est alors transmise vers le mobile (étape 27). Une nouvelle demande d'image peut alors être faite.

Le protocole d'échange entre le dispositif de mise en relation 2 et le serveur local 3 permet d'échanger des informations de manière formelle. Il couvre la liaison dispositif de mise en relation 2 vers le serveur local 3 et réciproquement. Ce protocole présente le format des échanges qui, dans les deux sens, sont portés par les couches du protocole Internet (HTTP, FTP ou SMTP). L'établissement de la communication entre le dispositif 2 et le serveur local 3 et la gestion de cette communication ne font pas précisément l'objet de la présente invention.

La communication entre le dispositif de mise en relation 2 et le serveur local 3 étant établie, l'établissement de la connexion PPP s'effectue suivant un mode unique quelle que soit l'origine de la communication. Le dispositif 2 joue le rôle de serveur PPP (DHCP) et fournit une adresse du protocole Internet au serveur local 3. Une authentification PAP est réalisée.

Le dialogue entre le dispositif de mise en relation 2 et le serveur local 3 s'effectue par échange de requêtes HTTP.

L'invention concerne différents modes d'activation de la demande utilisateur. La demande peut être activée par un message SMS, par un message MMS, ou par l'intermédiaire d'un portail WAP.

Dans le cas d'une demande activée par message SMS ou MMS, l'utilisateur distant émet un message SMS ou MMS préformaté vers une adresse électronique spécifique comportant, par exemple, les indications suivantes :
- identifiant (8 caractères),
- mot de passe (8 caractères),
- numéro de la caméra,
- type de message devant être retourné (par exemple code « 0 » pour un message SMS et « 1 » pour un message MMS).

A la réception du message, le dispositif 2 identifie l'utilisateur et cherche les informations qui correspondent à celui-ci (numéro de téléphone et/ou adresse IP de l'accès et numéro du port correspondant de la caméra). A l'aide de ces informations, le dispositif 2 établit un appel vers le serveur local (mode ADSL ou mode RTC) en fonction de l'installation de l'utilisateur. Une fois la liaison IP établie avec la caméra, le dispositif 2 émet une requête HTTP comportant en paramètre le type d'image souhaitée (JPEG ou MPEG) ainsi que la durée de la séquence si nécessaire (cas MPEG).

En retour, dans le cas où les images sont transmises à l'aide d'un message SMS, le dispositif de mise en relation 2 transmet le message SMS comportant une image au format JPEG vers le téléphone cellulaire appelant. A la réception du message SMS, le mobile affiche l'image.

De même, dans le cas où les images sont transmises à l'aide d'un message MMS, le dispositif transmet le message MMS comportant l'image au format MPEG vers le téléphone cellulaire appelant. A la réception du message MMS, le mobile affiche une image animée ou fixe (fixe dans le cas où le réseau d'accès du domicile est du type RTC ou GSM).

Dans le cas où la demande est activée par l'intermédiaire d'un portail WAP (sur mobile GSM, GPRS ou UMTS), l'utilisateur se connecte au portail WAP, s'identifie puis s'authentifie. Le dispositif de mise en relation 2 affiche l'environnement de l'utilisateur, dont un lien vers la liste des caméras, puis sélectionne la caméra souhaitée et recherche les informations correspondantes (numéro de téléphone et/ou adresse IP de l'accès et numéro du port correspondant à la caméra). A l'aide de ces informations, le dispositif 2 établit un appel vers le serveur local (mode ADSL ou mode RTC) en fonction de l'installation du client. Une fois la liaison IP établie avec la caméra, le dispositif 2 émet une requête HTTP comportant en paramètre le type d'image souhaitée (JPEG ou MPEG) ainsi que la durée de la séquence si nécessaire (cas MPEG). A la réception de l'image, le dispositif 10 retransmet l'image reçue vers le mobile WAP.

En retour, dans le cas où les images sont transmises par l'intermédiaire d'un portail WAP/GSM, le dispositif de liaison transmet une image au format MPEG en réponse à une requête initiale. A la réception de la réponse, le mobile affiche une image fixe. Dans le cas où les images sont retransmises par l'intermédiaire d'un portail WAP/GPRS ou WAP/UMTS, le dispositif de mise en relation transmet une image au format MPEG en réponse à la requête initiale. A la réception de la réponse, le mobile affiche une image animée ou fixe (fixe si le réseau d'accès du domicile est le réseau RTC ou GSM).

### GLOSSAIRE

- ADSL: : « Asymmetric Digital Subscriber Line »
- DHCP: : « Dynamic Host Configuration Protocol »
- FAI: : Fournisseur d'Accès Internet
- FTP: : « File Transfer Protocol »
- GPRS: : « Global Packet Radio Service »
- GSM: : « Global System for Mobile Communication »
- HTTP: : « Hyper Text Transfer Protocol »
- IP: : « Internet Protocol »
- JPEG: : « Joint Photographic Expert Group »
- MMS: : « Multimedia Message Service »
- MPEG: : « Moving Picture Expert Group »
- PAP: : « Peer Authentification Protocol »
- PPP: : « Point to Point Protocol »
- RNIS: : Réseau Numérique à Intégration de Services
- RTC: : Réseau Téléphonique Commuté
- SMTP: : « Simple Mail Transfer Protocol »
- TCP: : « Transmission Control Protocol »
- UMTS: : « Universal Mobile Telecommunication System »
- V.23: : recommandation V23 du livre bleu du CCITT/transmission par modulation à cohérence de phase
- WAP: : « Wireless Application Protocol »
- XDSL: : « Digital Subscriber Line »

## Revendications

1. Dispositif de mise en relation (2) d'au moins un téléphone cellulaire (1) avec au moins une caméra vidéo (4) connectée à un réseau d'accès (6) via un serveur local (3), le dispositif comprenant les modules logiciels suivants :
- une interface (7) comportant au moins un module (8, 9, 10) de gestion des appels d'au moins un utilisateur distant provenant d'un téléphone cellulaire,
- un module de gestion de communications (11) assurant l'authentification et la sécurisation de l'accès ainsi que l'aboutement d'une communication entre le téléphone cellulaire (1) et le serveur local (3),
- un module frontal de communication (12) qui opère la gestion des communications avec le serveur local (3) relié à la caméra video (4), lesdites communications étant établies via le réseau d'accès (6),
**caractérisé en ce qu'**il comprend en outre :
- un module (13) de gestion et de résolution de stratégie de diffusion d'images provenant de la caméra vidéo vers le téléphone cellulaire permettant de transformer les images en fonction de capacités du téléphone cellulaire (1) et d'un mode de transmission choisi, et
- un module d'exploitation (14) pour réaliser la gestion et l'administration de paramètres du téléphone cellulaire (1).

2. Dispositif selon la revendication 1, **caractérisé en ce que** l'interface (7) comprend un module serveur Internet (8) et/ou un module serveur WAP (9) et/ou un module serveur SMS ou MMS (10).

3. Dispositif selon la revendication 1 ou 2, dans lequel l'interface (7) traite les différentes requêtes provenant du téléphone cellulaire pour les présenter dans un protocole compréhensible par le module (11) de gestion des communications.

4. Dispositif selon la revendication 1, dans lequel le module frontal de communication (12) gère l'établissement et la rupture des communications entre ledit dispositif (2) et le serveur local (3).

5. Dispositif selon la revendication 1 comprenant des moyens logiciels et/ou physiques permettant de gérer des conflits possibles entre des appels entrants et des appels sortants et des moyens permettant d'être configurés et supervisés via une interface homme-machine locale ou déportée.

6. Dispositif selon la revendication 1 comprenant des moyens de réception d'image et des moyens de diffusion et de transformation de ladite image vers plusieurs adresses pré-configurées.

7. Dispositif selon la revendication 2 comprenant des moyens de gestion des appels permettant d'allouer dynamiquement les différents modules serveurs (8, 9, 10) en fonction de leur occupation et, si besoin, de reporter des établissements de liaison non prioritaires lorsque tous les modules serveurs sont utilisés.

8. Système de visualisation d'images fixes ou animées provenant d'au moins une caméra vidéo (4) sur au moins un téléphone cellulaire (1), **caractérisé en ce qu'**il comprend un dispositif (2) selon l'une quelconque des revendications 1 à 7, un réseau radio (5) reliant l'interface (7) dudit dispositif (2) au téléphone cellulaire (1), et un réseau d'accès (6) reliant le module frontal de communication (12) dudit dispositif (2) à un serveur local (3) relié à la caméra vidéo (4) .

9. Système de visualisation selon la revendication 8, **caractérisé en ce que** le réseau radio (5) est le réseau GSM, le réseau GPRS, ou le réseau UMTS.

10. Système de visualisation selon la revendication 8 ou 9, **caractérisé en ce que** le réseau d'accès est le réseau RTC, le réseau GSM, le réseau RNIS, le réseau xDSL, le réseau GPRS, ou le réseau UMTS.

11. Procédé de transmission d'image de caméra vidéo vers un mobile utilisateur (1) via un serveur local (3), un réseau d'accès (6) et un dispositif de mise en relation (2), comprenent les étapes suivantes :
- établissement d'une communication entre le mobile utilisateur et le dispositif de mise en relation (2) ledit dispositif étant selon l'une quelconque des revendications 1 à 7,
- à la réception de la communication par le dispositif de mise en relation (2), demande d'authentification du mobile utilisateur (11),
- identification des paramètres utilisateur ainsi que du contexte personnel de l'utilisateur,
- établissement de communication avec le serveur local (3) par le dispositif de mise en relation (2) via le réseau d'accès (6),
- émission d'une commande d'image à partir du mobile utilisateur (1),
- traduction de la commande d'image en données compréhensibles par la caméra vidéo (4),
- émission de la commande d'image vers la caméra vidéo (4),
- réception de la commande d'image par la caméra vidéo (4),
- transmission de l'image vers le dispositif de mise en relation (2) via le serveur local (3) et le réseau d'accès (6),
- résolution de la stratégie de diffusion et transformation de l'image dans le dispositif de mise en relation (2), et
- transmission de l'image vers le mobile utilisateur (1).

12. Procédé selon la revendication 11, **caractérisé en ce que** la transmission de l'image vers le mobile utilisateur (1) s'effectue à l'aide d'un message SMS ou MMS.

13. Procédé selon la revendication 11, **caractérisé en ce que** la transmission de l'image vers le mobile utilisateur (1) s'effectue par l'intermédiaire d'un portail WAP/GSM, ou WAP/GPRS, ou WAP/UMTS.

14. Procédé selon la revendication 11, dans lequel la communication entre le dispositif de mise en relation (2) et le serveur local (3) étant établie, l'établissement d'une connexion s'effectue suivant un mode unique quelle que soit l'origine de la communication, le dispositif de mise en relation (2) fournissant une adresse du protocole Internet au serveur local, et dans lequel le dialogue entre le dispositif de mise en relation (2) et le serveur local (3) s'effectue par échange de requêtes HTTP.

## Claims

1. Device for connecting (2) at least one cellular telephone (1) with at least one video camera (4) connected to an access network (6) via a local server (3), the device including the following software modules:
- an interface (7) comprising at least one module (8, 9, 10) for managing the calls of at least one remote user originating from a cellular telephone,
- a communications management module (11) ensuring authentication and access security as well as end-to-end connection of a communication between the cellular telephone (1) and the local server (3),
- a front-end communication module (12) which manages communications with the local server (3) connected to the video camera (4), the said communications being established via the access network (6),
**characterized in that** it further comprises:
- a module (13) for managing and resolving broadcasting strategy for pictures originating from the video camera to the cellular telephone for transforming the pictures according to capacities of the cellular telephone (1) and a chosen transmission mode, and
- an operating module (14) for carrying out the management and administration of cellular telephone (1) parameters.

2. Device according to Claim 1, **characterized in that** the interface (7) includes an Internet server module (8) and/or a WAP server module (9) and/or an SMS or MMS server module (10).

3. Device according to Claim 1 or 2, in which the interface (7) processes the different requests originating from the cellular telephone for presenting them in a protocol comprehensible by the communications management module (11).

4. Device according to Claim 1, in which the front-end communication module (12) handles the establishment and disconnection of communications between the said device (2) and the local server (3).

5. Device according to Claim 1 including software and/or physical means for handling possible conflicts between incoming calls and outgoing calls and means for being configured and monitored via a local or remote man-machine interface.

6. Device according to Claim 1 including means of receiving a picture and means of broadcasting and transforming the said picture to several pre-configured addresses.

7. Device according to Claim 2 including call management means for allocating dynamically the different server modules (8, 9, 10) according to their occupancy and, if necessary, deferring non-priority connection establishments when all the server modules are being used.

8. System of displaying fixed or moving pictures originating from at least one video camera (4) on at least one cellular telephone (1), **characterized in that** it includes a device (2) according to any one of Claims 1 to 7, a radio network (5) linking the interface (7) of the said device (2) to the cellular telephone (1), and an access network (6) linking the front-end communication module (12) of the said device (2) to a local server (3) linked to the video camera (4).

9. Display system according to Claim 8, **characterized in that** the radio network (5) is the GSM network, the GPRS network, or the UMTS network.

10. Display system according to Claim 8 or 9, **characterized in that** the access network is the PSTN network, the GSM network, the ISDN network, the xDSL network, the GPRS network, or the UMTS network.

11. Method of transmitting a video camera picture to a user mobile (1) via a local server (3), an access network (6) and a connecting device (2), including the following steps:
- establishment of a communication between the user mobile and the connecting device (2), the said device being according to any one of Claims 1 to 7,
- on reception of the communication by the connecting device (2), mobile user authentication request (11),
- identification of the user parameters as well as the user's personal situation,
- establishment of communication with the local server (3) by the connecting device (2) via the access network (6),
- transmission of a picture command from the user mobile (1),
- translation of the picture command into data comprehensible by the video camera (4),
- transmission of the picture command to the video camera (4),
- reception of the picture command by the video camera (4),
- transmission of the picture to the connecting device (2) via the local server (3) and the access network (6),
- resolution of the strategy for broadcasting and transforming the picture in the connecting device (2), and
- transmission of the picture to the user mobile (1).

12. Method according to Claim 11, **characterized in that** the transmission of the picture to the user mobile (1) is performed with the aid of an SMS or MMS message.

13. Method according to Claim 11, **characterized in that** the transmission of the picture to the user mobile (1) is performed via the intermediary of a WAP/GSM, or WAP/GPRS, or WAP/UMTS portal.

14. Method according to Claim 11, in which, when the communication between the connecting device (2) and the local server (3) has been established, a connection is established according to a single mode whatever the origin of the communication, the connecting device (2) supplying an Internet Protocol address to the local server, and in which the dialogue between the connecting device (2) and the local server (3) is performed by exchange of HTTP requests.

## Patentansprüche

1. Vorrichtung (2) zum Herstellen einer Verbindung mindestens eines Funktelefons (1) mit mindestens einer Videokamera (4), die über einen lokalen Server (3) mit einem Zugriffsnetz (6) verbunden ist, wobei die Vorrichtung die folgenden Softwaremodule aufweist:
- eine Schnittstelle (7), die mindestens ein Modul (8, 9, 10) zur Verwaltung der Anrufe mindestens eines fernen Benutzers aufweist, die von einem Funktelefon kommen,
- ein Kommunikations-Verwaltungsmodul (11), das die Authentifizierung und die Sicherung des Zugriffs sowie das Zustandekommen einer Kommunikation zwischen dem Funktelefon (1) und dem lokalen Server (3) gewährleistet,
- ein Kommunikations-Frontmodul (12), das die Verwaltung der Kommunikationen mit dem mit der Videokamera (4) verbundenen lokalen Server (3) durchführt, wobei die Kommunikationen über das Zugriffsnetz (6) aufgebaut werden,
**dadurch gekennzeichnet, dass** sie außerdem aufweist:
- ein Modul (13) der Verwaltung und der Auflösung der Verbreitungsstrategie von von der Videokamera kommenden Bildern zum Funktelefon, das die Umwandlung der Bilder in Abhängigkeit von Kapazitäten des Funktelefons (1) und von einem gewählten Übertragungsmodus ermöglicht, und
- ein Betriebsmodul (14), um die Verwaltung und Steuerung von Parametern des Funktelefons (1) durchzuführen.

2. Vorrichtung nach Anspruch 1, **dadurch gekennzeichnet, dass** die Schnittstelle (7) ein Internetserver-Modul (8) und/oder ein WAP-Server-Modul (9) und/oder ein SMS- oder MMS-Server-Modul (10) aufweist.

3. Vorrichtung nach Anspruch 1 oder 2, bei der die Schnittstelle (7) die verschiedenen vom Funktelefon kommenden Anforderungen verarbeitet, um sie in einem Protokoll zu präsentieren, das für das Kommunikations-Verwaltungsmodul (11) verständlich ist.

4. Vorrichtung nach Anspruch 1, bei der das Kommunikations-Frontmodul (12) den Aufbau und die Unterbrechung der Kommunikationen zwischen der Vorrichtung (2) und dem lokalen Server (3) verwaltet.

5. Vorrichtung nach Anspruch 1, die Software- und/oder physikalische Mittel, die es erlauben, mögliche Konflikte zwischen eingehenden Anrufen und ausgehenden Anrufen zu verwalten, und Mittel aufweist, die es ermöglichen, über eine lokale oder ausgelagerte Mensch/Maschine-Schnittstelle konfiguriert oder überwacht zu werden.

6. Vorrichtung nach Anspruch 1, die Bildempfangsmittel und Mittel zur Verbreitung und Umwandlung des Bilds zu mehreren vorkonfigurierten Adressen aufweist.

7. Vorrichtung nach Anspruch 2, die Mittel zur Verwaltung der Anrufe aufweist, die es ermöglichen, dynamisch die verschiedenen Servermodule (8, 9, 10) in Abhängigkeit von ihrem Besetztzustand zuzuweisen, und gegebenenfalls nicht prioritäre Verbindungsaufbauten zu verschieben, wenn alle Servermodule verwendet werden.

8. System zur Anzeige von stehenden oder beweglichen Bildern, die von mindestens eine Videokamera (4) kommen, auf mindestens einem Funktelefon (1), **dadurch gekennzeichnet, dass** es eine Vorrichtung (2) nach einem der Ansprüche 1 bis 7, ein Funknetz (5), das die Schnittstelle (7) der Vorrichtung (2) mit dem Funktelefon (1) verbindet, und ein Zugriffsnetz (6) aufweist, das das Kommunikations-Frontmodul (12) der Vorrichtung (2) mit einem lokalen Server (3) verbindet, der mit der Videokamera (4) verbunden ist.

9. Anzeigesystem nach Anspruch 8, **dadurch gekennzeichnet, dass** das Funknetz (5) das GSM-Netz, das GPRS-Netz oder das UMTS-Netz ist.

10. Anzeigesystem nach Anspruch 8 oder 9, **dadurch gekennzeichnet, dass** das Zugriffsnetz das RTC (RTC = réseau téléphonique commute: commutiertes Telefonnetz)-Netz, das GSM-Netz, das ISDN-Netz, das xDSL-Netz, das GPRS-Netz oder das UMTS-Netz ist.

11. Verfahren zur Bildübertragung von einer Videokamera zu einem Benutzer-Mobiltelefon (1) über einen lokalen Server (3), ein Zugriffsnetz (6) und eine Vorrichtung (2) zur Verbindungsherstellung, das die folgenden Schritte aufweist:
- Aufbau einer Kommunikation zwischen dem Benutzer-Mobiltelefon und der Vorrichtung (2) zur Verbindungsherstellung, wobei die Vorrichtung gemäß einem der Ansprüche 1 bis 7,
- bei Empfang der Kommunikation von der Vorrichtung (2) zur Verbindungsherstellung, Anforderung der Authentifizierung des Benutzer-Mobiltelefons (11),
- Identifizierung der Benutzerparameter sowie des persönlichen Kontexts des Benutzers,
- Aufbau einer Kommunikation mit dem lokalen Server (3) durch die Vorrichtung (2) zur Verbindungsherstellung über das Zugriffsnetz (6),
- Senden einer Bildbestellung ausgehend vom Benutzer-Mobiltelefon (1),
- Übersetzung der Bildbestellung in für die Videokamera (4) verständliche Daten,
- Senden der Bildbestellung zur Videokamera (4),
- Empfang der Bildbestellung durch die Videokamera (4),
- Übertragung des Bilds zur Vorrichtung (2) zur Verbindungsherstellung über den lokalen Server (3) und das Zugriffsnetz (6),
- Auflösung der Verbreitungsstrategie und Umwandlung des Bilds in der Vorrichtung (2) zur Verbindungsherstellung, und
- Übertragung des Bilds zum Benutzer-Mobiltelefon (1).

12. Verfahren nach Anspruch 11, **dadurch gekennzeichnet, dass** die Übertragung des Bilds zum Benutzer-Mobiltelefon (1) mit Hilfe einer SMS- oder MMS-Mitteilung erfolgt.

13. Verfahren nach Anspruch 11, **dadurch gekennzeichnet, dass** die Übertragung des Bilds zum Benutzer-Mobiltelefon (1) über ein WAP/GSM- oder WAP/GPRS- oder WAP/UMTS-Portal erfolgt.

14. Verfahren nach Anspruch 11, bei dem, wenn die Kommunikation zwischen der Vorrichtung (2) zur Verbindungsherstellung und dem lokalen Server (3) aufgebaut ist, der Aufbau einer Verbindung gemäß einem einzigen Modus erfolgt, ohne Rücksicht auf den Ursprung der Kommunikation, wobei die Vorrichtung (2) zur Verbindungsherstellung eine Adresse des Internet-Protokolls an den lokalen Server liefert, und bei dem der Dialog zwischen der Vorrichtung (2) zur Verbindungsherstellung und dem lokalen Server (3) durch einen Austausch von HTTP-Anforderungen erfolgt.
